(19) Europäisches Patentamt
European Patent Office
Office européen des brevets

(11) **EP 4 576 561 A1**

(12) **EUROPEAN PATENT APPLICATION**

(43) Date of publication:
**25.06.2025  Bulletin 2025/26**

(51) International Patent Classification (IPC):
***H02P 25/22*** *(2006.01)*

(21) Application number: **23217951.5**

(52) Cooperative Patent Classification (CPC):
**H02P 25/22**

(22) Date of filing: **19.12.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **Liukkonen, Olli**
**00380 Helsinki (FI)**

• **Kadachigov, Pavel**
**5400 Baden (CH)**
• **Lahtinen, Jouni**
**00380 Helsinki (FI)**
• **Strandström, Niko**
**00380 Helsinki (FI)**
• **Seppänen, Sakari**
**00380 Helsinki (FI)**

(74) Representative: **Kolster Oy Ab**
**Salmisaarenaukio 1**
**P.O. Box 204**
**00181 Helsinki (FI)**

(54) **MEDIUM VOLTAGE VARIABLE SPEED ASSEMBLY**

(57)    A medium voltage variable speed assembly comprising an electric machine (2), and a power supply configuration for supplying alternating current power to the electric machine (2). The electric machine comprises a plurality of stator winding systems (4). The power supply configuration comprises a supply converter system (6) having a two-level direct current input (61) and an alternating current output (62) connected to the plurality of stator winding systems (4). The supply converter system (6) comprises a plurality of converter arrangements (8) connected in series such that each of the converter arrangements (8) comprises at least one two-level converter unit having a DC link whose nominal voltage is low enough for IGBTs, MOSFETs or similar components. Characteristics of the electric machine such as a number of machine phases, a number of stator poles, a number of stator winding systems and a number of stator slots are selected in a specific way.

Fig. 6

EP 4 576 561 A1

**Description**

FIELD OF THE INVENTION

The present invention relates to a medium voltage variable speed assembly comprising a rotating electric machine and a power supply configuration for supplying alternating current power to the electric machine.

BACKGROUND OF THE INVENTION

The torque and further the power of the electric machine is linked to the rotor volume. This leads to design where the rotor diameter and length should be maximized and correspondingly the height of the stator yoke should be minimized. A commonly known formula for electric machine power production is:

$$P_{mec} = C_{mec} \cdot D^2 \cdot L \cdot n_{syn}$$

where $C_{mec}$ denotes machine constant, D is the rotor diameter, L is the equivalent stack length and $n_{syn}$ is the synchronous speed of the rotor.

As it would be beneficial to maximize the rotor volume, the first limiting factor comes from the space reserved for the magnetic flux. Electrical steel sheets can be used up to approximately 1,2 T magnetic flux density without major saturation. If the flux density is much higher, the required magnetizing current increases without any improvements in torque production. Due to this flux density limit, machines are designed so that either the stator or rotor yokes are not heavily saturated. The flux density in the stator (or rotor) yoke depends also about the number of poles of the machine. If there are only two poles in the machine, the flux needs to circulate a half of the machine before crossing back to air gap. For higher number of poles, the same air gap flux is divided more equally around the yoke. As a result, the required thickness of stator yoke deceases when number of poles are increased.

A required stator and rotor yoke thickness decreases remarkably when the number of poles is increased. In fact, the four-pole machine has a larger rotor diameter but a smaller stator outer diameter than two pole machines. In practice it leads to smaller and therefore more cost-effective machine design.

If the speed of the shaft system is controlled by a variable speed drive (VSD), it is highly beneficial or even mandatory to allow continuous operation in any speed between the zero and nominal, also called as sub-critical operation. Unfortunately, the mechanical structure of electric machine tends to limit the operation speed range of the system. These limitations affect sub-critical design in two ways; due to rotor bending modes and due to modes of the frame.

The rotor bending mode is strongly depending on the bearing span of the system, the weight of the rotor core and the diameter of the shaft. In two pole machines the rotor core diameter is limited because of stator yoke thickness. In addition, the length of the rotor core is limited due the space reserved to long stator coil ends. These factors decrease the rotor volume and further the weight of the core. Eventually, the first bending mode occurs at higher frequency, but the same factors are also decreasing the torque of the machine. If the number of poles is increased, the rotor diameter can be increased as well as the stator yoke becomes thinner. This increases the torque production but also the weight of the core. Initially, the motor produces more torque, but the first bending mode limits the nominal speed to lower than in two pole machines. However, this drawback can be compensated by considering also the dimension of the rotor yoke. As the number of poles are increased, also required thickness of the rotor yoke decreases. With the thinner yoke, larger shaft diameters can be used. Therefore, the rotor can be designed so that the first bending mode occurs at higher frequencies than with two pole designs. As a summary, by using an optimal pole number the machine is capable to produce more torque from the same frame size and yet without sacrificing the rotor dynamics e.g., maintaining the same operation speed range.

The pole number of the machine affects also to excitation forces caused by the radial air gap flux. Especially in the two pole machines, the radial flux creates a force to the stator inner diameter that rotates with the twice line frequency.

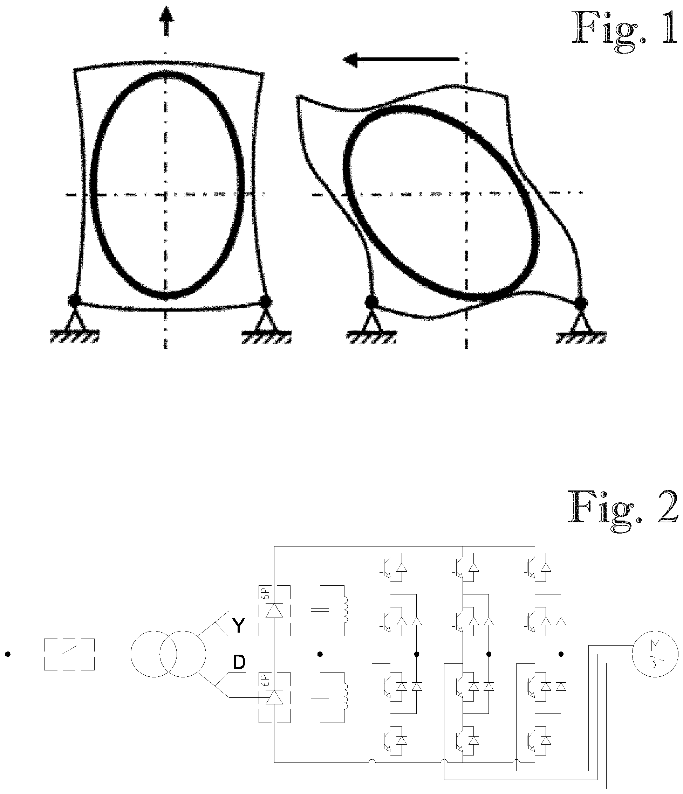

This force can excite the mechanical modes of the static structure, like the global modes of the machine. The most problematic mode shapes that can be excited with this kind of force are the horizontal modes of the frame, presented in Figure 1.

The nominal frequency of horizontal mode is depending on the dimensions and the weight of the machine, so the only practical solution to tackle vibrations is to reduce the excitation force from stator to frame. In two pole machines, common solutions are to increase stator yoke thickness and reduce the air gap flux density. Both have a negative effect to machines power density and further to size and cost.

A more fundamental type of solution to avoid vibration problems and critical speed limitations caused by the mechanical mode shapes is to reduce harmful excitation modes in the stator core. Air gap forces have a different shape between two and four pole designs. The number of symmetrical rotating force components and the frequency of those components in the stator inner surface depends directly on the number of poles and the supply frequency of the machine.

Therefore, if the pole number is high, also the force component caused by the air gap flux impacts to smaller area. Since the excitation force affects to more narrow area of the stator, it does not excite the global modes of the complete structure. It can also be generalized that if the pole number of large electric machine with modular steel frame is high enough, the lowest mechanical mode shapes of the frame occur at frequencies that are much lower than the frequencies of the excitation forces caused by the stator main flux.

As a summary, there are multiple reasons why the pole number of the electric machine supplied with VSD should be selected based on application specific requirements instead of picking up a standard direct-on-line machine as a base design:

- The motor with optimal number of poles is smaller and more cost effective.
- The motor with optimal number of poles has wider sub-critical operation range.
- The motor with optimal number of poles can be designed so that the excitation forces caused by the stator main flux do not have a corresponding mechanical mode shape, leading to low vibrations in the structure.

In high power applications, the end user connects direct-on-line motors to medium voltage grid. Typically, this medium voltage grid operates with voltage levels between 4.16 - 13.2 kV. If the application requires a speed control, it would be beneficial to connect these speed-controlled machines to this same grid. This means that also the VSD must operate with the medium voltage level. Naturally, higher voltage level also reduces the cabling cost of the system.

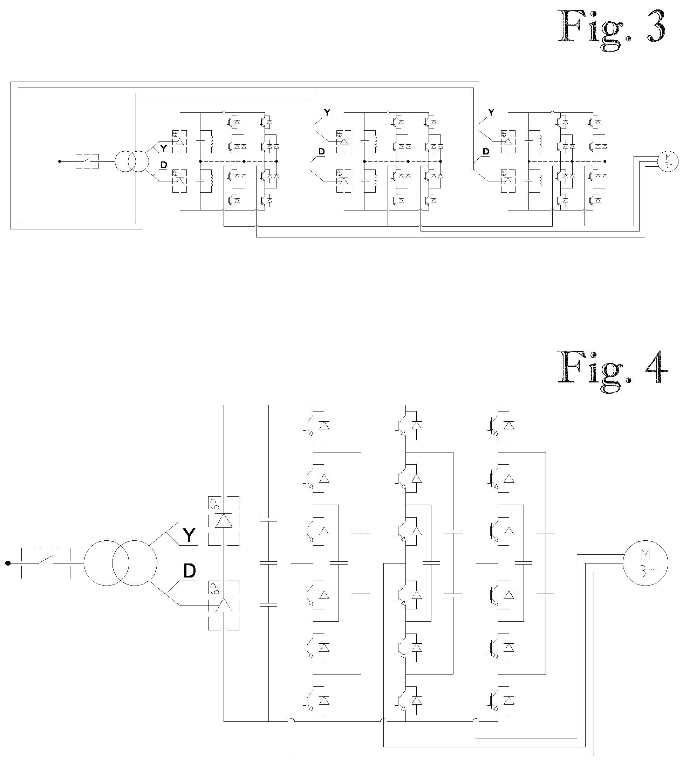

Traditional solution in high-power medium voltage VSD applications is to made converter with integrated gate-commutated thyristor (IGCT) or similar thyristor-based semiconductors that withstands high voltages. Unfortunately, these thyristor-based semiconductors typically operate with high switching losses. As the switching losses are high, the switching frequency must be much smaller than converters based on insulated-gate bipolar transistors (IGBT) or metal-oxide-semiconductor field-effect transistors (MOSFET). A low switching frequency limits also the maximum output frequency of the converter due to fact that number of switching per one fundamental cycle should be high enough, typically above 15 to achieve accurate control. ICGT based converters with NPC topology are presented in Figures 2 and 3. A separate block transformer with multiple secondary windings is needed in both cases. In the machine perspective, a high THD in inverter output voltage as well as the limited output frequency decreases the performance of the machine.

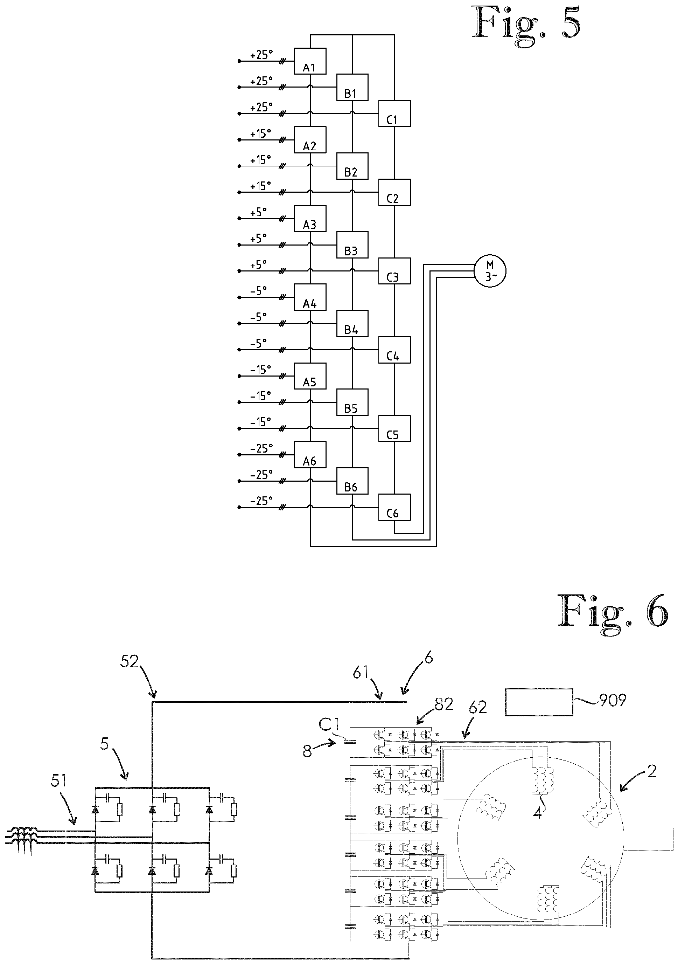

To tackle the problem caused by the high switching losses of thyristor-based components, different types of multilevel inverter modules have been developed by the industry. With this approach, transistor-based semiconductors (IGBT's) are used instead of thyristors. However, this requires multiple DC-levels to system and therefore more complex rectifying unit. In practice, for example Cascaded H-bridge can be used only with a special transformer with multiple secondary windings. A high number of secondary windings forces to integrate the transformer very next to converter unit since otherwise the cabling cost becomes too high. Although the motor design can be done more optimally, the system complexity increases as well as the cost. Additional limitation comes from the serial connection of components, these configurations do not scale well to multi-phase configurations. Some of the most common configurations of medium voltage converters made with IGBT components are presented in Figures 4 and 5.

Figure 4 shows a known five level Active Neutral Point Clamped (ANPC) VSD assembly with IGBT components. Figure 5 shows a known cascaded H-Bridge with IGBT modules and a special transformer. In Figure 5, power cells are denoted with reference signs A1-A6, B1-B6 and C1-C6. The power cells shown in Figure 5 are IGBT modules.

As described above, the pole number has a major impact to machines size and performance. However, since the pole number affects directly to supply frequency of the machine, existing VSD technology limits optimizing the electric machine. As a result of this output frequency limitation, caused by the thyristor-based semiconductors, the motors must be made with non-optimal number of poles that further reduces motors utilization factor and eventually, increases the cost of the motor. Multi-level converters with IGBT components enables more optimal machine design but complex converter structure tends to lead higher system cost with lower total efficiency.

When medium voltage direct online starter (DOL) motor is compared to VSD system, the end user needs to take account not only the additional losses and the cost of a separate block transformer but also the required space and ventilation for that. Especially in cases where the customer has for example 6.6 kV medium voltage distribution grid, the installation cost of a medium power (<2 MW) variable speed drive might be several times higher than just for medium voltage DOL motor.

BRIEF DESCRIPTION OF THE INVENTION

An object of the present invention is to provide a medium voltage variable speed assembly optimized for certain speed and power. The objects of the invention are achieved by a medium voltage variable speed assembly which is characterized by what is stated in the independent claim. The preferred embodiments of the invention are disclosed in the dependent claims.

The invention is based on the idea of providing an electric machine of the assembly with a plurality of stator winding systems, providing a power supply configuration of the assembly with a plurality of converter arrangements connected in series such that each of the converter arrangements comprises at least one two-level converter unit having a DC link whose nominal voltage is low enough for IGBTs, MOSFETs or similar components, and selecting a number of machine phases, a number of stator winding systems, a number of stator winding system groups, a number of stator poles, a number of stator poles connected in series in each stator winding system, and a number of stator slots in a specific way.

An advantage of the medium voltage variable speed assembly of the invention is that a rotor volume and a torque production per volume of the electric machine of the assembly is maximized while a direct current input of the supply converter system is a two-level input. The electric machine of the assembly is optimized without limitations relating to nominal frequency. Converter units of the supply converter system are implemented with controllable switches having relatively low nominal voltage, such as IGBTs, MOSFETs or similar components. The power supply configuration of the assembly enables implementing a grid converter system for example by means of a six-pulse configuration with passive semiconductors such as diodes. A block transformer is not needed and therefore also transformer losses are avoided.

The invention reduces mechanical stress in the electric machine during a short circuit in the supply converter system. If a single converter unit fails and ends up in a short circuit, only a single winding system is short-circuited, and forces caused by the short circuit currents are reduced when compared to a full short circuit of all stator windings.

In a medium voltage variable speed assembly of the invention, the electric machine is optimized to certain speed and power by selecting dimensions of the magnetic circuit so that the rotor volume is maximized while the machine frame size is minimized. Part of this optimization process is to select the number of poles in the electric machine without limits in the nominal frequency of the machine. This can be done by splitting the stator winding of electric machine to separate winding systems which are supplied by a supply converter system implemented by controllable semiconductor switches having high switching and output frequencies.

BRIEF DESCRIPTION OF THE DRAWINGS

In the following the invention will be described in greater detail by means of preferred embodiments with reference to the attached drawings, in which

Figure 1 shows typical mechanical mode shapes of electric machine with modular frame;
Figure 2 shows a known typical medium voltage inverter with NPC topology;
Figure 3 shows a known medium voltage inverter with NPC inverter modules in H-bridge;
Figure 4 shows a known VSD assembly with a five level ANPC topology;
Figure 5 shows a known cascaded H-Bridge with IGBT modules and a special transformer;
Figure 6 shows a connection diagram of a medium voltage variable speed assembly according to an embodiment of the invention;
Figure 7 shows a connection diagram of a medium voltage variable speed assembly according to another embodiment of the invention; and
Figure 8 shows a connection diagram of a medium voltage variable speed assembly according to yet another embodiment of the invention.

DETAILED DESCRIPTION OF THE INVENTION

Figure 6 shows a connection diagram of a medium voltage variable speed assembly comprising an electric machine 2, a power supply configuration for supplying alternating current power to the electric machine 2, and a controller 909 for controlling the power supply configuration. Herein, a medium voltage variable speed assembly is an assembly in which the nominal voltage of the electric machine of the assembly is in a range of 1 kV - 35 kV.

The electric machine 2 is a rotating electric machine comprising six poles and six stator winding systems 4. Each of the stator winding systems 4 is a three-phase system isolated from the ground and from the other stator winding systems 4. The power supply configuration comprises a grid converter system 5 and a supply converter system 6.

In an embodiment, each of the stator winding systems comprises two layer diamond coils.

The grid converter system 5 has an alternating current input 51 and a direct current output 52. The alternating current input 51 is adapted to be electrically connected to a three-phase medium voltage grid. In Figure 6, the alternating current input 51 is galvanically connected to the three-phase medium voltage grid.

The nominal voltage of the alternating current input 51 of the grid converter system 5 is 5.6 kV. In an alternative embodiment, the nominal voltage of the alternating current input of the grid converter system is in a range of 4 kV to 15 kV. The grid converter system 5 has a six-pulse configuration implemented with six diodes. In another alternative embodiment, the grid converter system has a six-pulse configuration with other passive semiconductors.

The supply converter system 6 has a direct current input 61 and an alternating current output 62. The direct current input 61 is electrically connected to the direct current output 52 of the grid converter system 5. The alternating current output 62 is electrically connected to the stator winding systems 4.

The direct current input 61 of the supply converter system 6 is a two-level input such that the grid converter system 5 is electrically connected to the supply converter system 6 exclusively by two busbars, namely a positive busbar and a negative busbar. The supply converter system 6 comprises six converter arrangements 8 connected in series. A voltage over the six series-connected converter arrangements 8 is equal to a voltage between the positive busbar and the negative busbar.

Each of the converter arrangements 8 comprises exactly one converter unit 82 and is adapted to supply alternating current power to exactly one stator winding system 4. In alternative embodiments, a number of the stator winding systems is a multiple of a number of the converter arrangements.

The controller 909 is adapted to control the converter arrangements 8 such that they are cophasal relative to each other so that there is no phase shift between different converter arrangements 8. In an alternative embodiment, the supply converter system comprises a plurality of converter arrangements connected in series, wherein the plurality of converter arrangements comprises a plurality of converter arrangement groups such that there is a phase shift between different converter arrangement groups. Each of the converter arrangement groups has the same amount of converter arrangements.

Each converter arrangement 8 comprises a capacitor system electrically connected to a direct current input of the converter arrangement 8. Each capacitor system has exactly one capacitor C1. In alternative embodiments, each capacitor system comprises at least one capacitor.

Each converter unit 82 is a two-level converter unit and comprises a three-phase output electrically connected to exactly one stator winding system 4. Herein, a two-level converter is a converter implemented by a six-pulse bridge. Each converter unit 82 comprises six controllable switches adapted to supply alternating current power to exactly one stator winding system 4. Each of the controllable switches is an insulated-gate bipolar transistor (IGBT).

In alternative embodiments, controllable switches of each converter unit of a plurality of converter arrangements comprise insulated-gate bipolar transistors, metal-oxide-semiconductor field-effect transistors (MOSFET), or similar components having low switching losses and high switching frequency. In said alternative embodiments, a switching frequency of the controllable switches of each converter unit is greater than or equal to 750 Hz.

A medium voltage variable speed assembly according to present invention is designed such that a parameter q defined by an equation

$$q = \frac{Q_s}{2p3c_p}$$

is a number of stator slots per pole per phase, wherein $Q_s$ is a number of stator slots in the electric machine, p is a number of pole pairs in the electric machine, and $c_p$ is a number of stator winding system groups, wherein in embodiments in which $c_p$ is greater than or equal to two, $c_p$ gives a number of stator winding systems in each stator pole that have a phase shift relative to each other. A phase shift between two consecutive stator winding system groups is $60°/c_p$. Therefore, a number of phases in an electric machine of a medium voltage variable speed assembly according to present invention is equal to $3c_p$. Further, a number $n_c$ of converter arrangements connected in series in the supply converter system and a number $k_{sp}$ of stator poles connected in series in each stator winding system and a number $k_{pp}$ of stator poles connected in parallel in each stator winding system fulfil a requirement $n_c k_{sp} k_{pp} = 2pc_p$ and $qk_{sp}$ is an integer.

Referring to the embodiment shown in Figure 6, p=3, $c_p$= 1, $n_c$=6, $k_{pp}$ =1 and $k_{sp}$=1. Therefore, a number $Q_s$ of stator slots can be selected to be multiple of 18, or a multiple of either one of them.

There are six stator winding systems 4 in the medium voltage variable speed assembly shown in Figure 6. Selecting $c_p$=2 for the assembly of Figure 6, the assembly is a six-phase assembly. In the six-phase assembly, there are two stator winding system groups between which there is a phase shift of $60°/c_p$, which equals to 30°. It should be noted that values 1, 2 and 3 can be selected for $c_p$ in the assembly shown in Figure 6 simply by configuring the controller 909, no modifications are required to the hardware of the supply converter system 6 if the stator winding is connected accordingly.

As a consequence of maximum voltage of IGBTs available at present, the number $n_c$ of converter arrangements connected in series in the supply converter system 6 of Figure 6 has been selected such that a nominal DC link voltage of each of the converter units is less than 1700 V. A nominal voltage $U_{tot}$ at the direct current input 61 of the supply converter system 6 is a sum of nominal voltages of DC links of the converter units 82. In an alternative embodiment, each converter unit of the plurality of converter arrangements is a two-level converter unit and has a DC link whose nominal voltage is less than or equal to 2 kV.

In an embodiment in which $c_p$=3, 2p= 6, $k_{sp}$ = 1 and $k_{pp}$ = 1, there are eighteen stator winding systems in total, wherein there is a 20° phase shift between a first stator winding system group and a second stator winding system group, and between the second stator winding system group and a third stator winding system group. The assembly comprises eighteen converter arrangements in three converter arrangement groups, wherein there is a 20° phase shift between a first converter arrangement group and a second converter arrangement group, and between the second converter arrangement group and a third converter arrangement group.

In an embodiment in which $c_p = 3$, $2p = 6$, $k_{sp} = 3$, and $k_{pp} = 1$ there are six stator winding systems in total, wherein there is a 20° phase shift between a first stator winding system group and a second stator winding system group, and between the second stator winding system group and a third stator winding system group. The assembly comprises six converter arrangements in three converter arrangement groups, wherein there is a 20° phase shift between a first converter arrangement group and a second converter arrangement group, and between the second converter arrangement group and a third converter arrangement group.

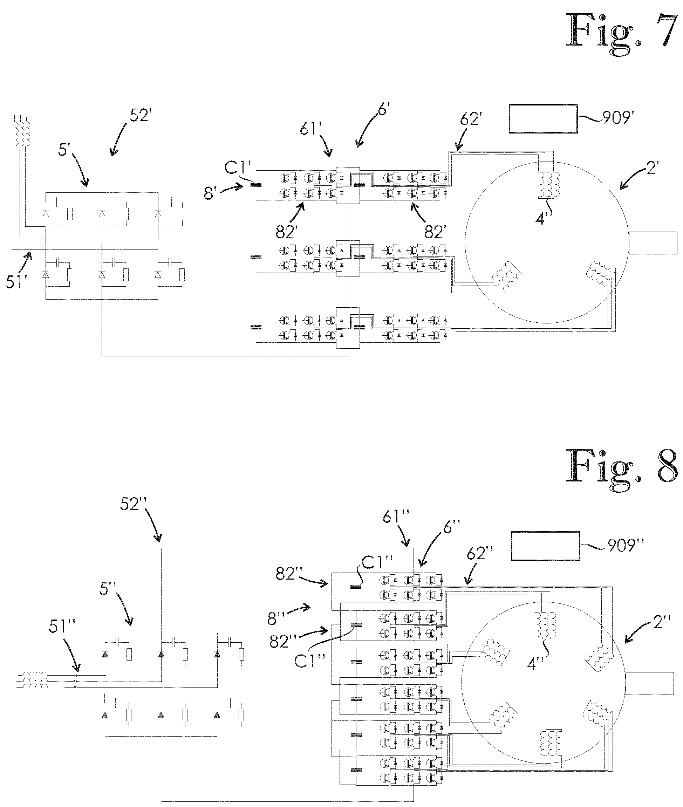

Figure 7 shows a connection diagram of a medium voltage variable speed assembly which is a modification of the assembly shown in Figure 6. The medium voltage variable speed assembly of Figure 7 comprises an electric machine 2', a power supply configuration for supplying alternating current power to the electric machine 2', and a controller 909' for controlling the power supply configuration.

The electric machine 2' is a rotating electric machine comprising three stator winding systems 4'. Each of the stator winding systems 4' is a three-phase system isolated from the ground and from the other stator winding systems 4'. The power supply configuration comprises a grid converter system 5' and a supply converter system 6'.

The grid converter system 5' is identical to the grid converter system 5. The supply converter system 6' has a direct current input 61' and an alternating current output 62'. The direct current input 61' is electrically connected to a direct current output 52' of the grid converter system 5'. The alternating current output 62' is electrically connected to the stator winding systems 4'.

The direct current input 61' of the supply converter system 6' is a two-level input. The supply converter system 6' comprises three converter arrangements 8' connected in series. Each of the converter arrangements 8' comprises two parallel connected converter units 82' and is adapted to supply alternating current power to exactly one stator winding system 4'. Each of the converter units 82' is adapted to supply alternating current power to exactly one stator winding system 4'.

The controller 909' is adapted to control the converter arrangements 8' such that they are cophasal relative to each other.

Each converter arrangement 8' comprises a capacitor system electrically connected to a direct current input thereof. Each capacitor system has two capacitors C1', one for each parallel connected converter units 82'. In an alternative embodiment, a capacitor system comprises exactly one capacitor while the converter arrangement comprises a plurality of parallel connected converter units.

Each converter unit 82' is identical to the converter unit 82. Each converter arrangement 8' comprises a three-phase output electrically connected to exactly one stator winding system 4'. The two parallel connected converter units 82' of each converter arrangements 8' are adapted to supply alternating current power to the same stator winding system 4'.

Figure 8 shows a connection diagram of a medium voltage variable speed assembly which is another modification of the assembly shown in Figure 6. The medium voltage variable speed assembly of Figure 8 comprises an electric machine 2", a power supply configuration for supplying alternating current power to the electric machine 2", and a controller 909" for controlling the power supply configuration.

The electric machine 2" is a rotating electric machine comprising six stator winding systems 4". Each of the stator winding systems 4" is a three-phase system isolated from the ground and from the other stator winding systems 4". The power supply configuration comprises a grid converter system 5" and a supply converter system 6".

The grid converter system 5" is identical to the grid converter system 5. The supply converter system 6" has a direct current input 61" and an alternating current output 62". The direct current input 61" is electrically connected to a direct current output 52" of the grid converter system 5". The alternating current output 62" is electrically connected to the stator winding systems 4".

The direct current input 61" of the supply converter system 6" is a two-level input. The supply converter system 6" comprises three converter arrangements 8" connected in series. Each of the converter arrangements 8" comprises two parallel connected converter units 82" and is adapted to supply alternating current power to two stator winding system 4" such that the two parallel connected converter units 82" are adapted to supply alternating current power to different stator winding systems 4". Each of the converter units 82" is adapted to supply alternating current power to exactly one stator winding system 4".

The controller 909" is adapted to control the converter arrangements 8" identically such that there is a phase shift between the two parallel connected converter units 82" of each converter arrangement 8". Each converter unit 82" is identical to the converter unit 82.

Each converter arrangement 8" comprises a capacitor system electrically connected to a direct current input thereof. Each capacitor system has two capacitors C1", one for each parallel connected converter units 82".

In an embodiment in which $c_p = 3$, $2p = 6$, $k_{sp} = 1$ and $k_{pp} = 3$, there are six stator winding systems in total, wherein there is a 20° phase shift between a first stator winding system group and a second stator winding system group, and between the second stator winding system group and a third stator winding system group. The assembly comprises three converter arrangements, each having two converter units. There is a 20° phase shift between a first converter arrangement and a second converter arrangement, and between the second converter arrangement and a third converter arrangement.

In another embodiment in which $c_p=2$, $2p = 6$, $k_{sp} = 1$ and $k_{pp} = 2$, there are six stator winding systems in total, wherein there is a 30° phase shift between a first stator winding system group and a second stator winding system group. The assembly comprises two converter arrangements, each having three converter units, wherein there is a 30° phase shift between a first converter arrangement and a second converter arrangement.

An example of configuring an electric machine having six poles for medium voltage grids having different voltage levels while maintaining the same speed and power ratings for the electric machine is presented in a table below. In the table, $U_g$ is a nominal voltage of the medium voltage grid, $U_{tot}$ is a nominal voltage at a direct current input of the supply converter system, $n_c$ is a number of converter arrangements connected in series in the supply converter system, $U_{ca}$ is a nominal voltage of a DC link in each converter unit of the plurality of converter arrangements, $3c_p$ is a number of phases in the six pole electric machine, $k_{sp}$ is a number of stator poles connected in series in each stator winding system, $k_{pp}$ is a number of stator poles connected in parallel in each stator winding system and $Q_s$ is a number of stator slots in the electric machine.

| $U_g$ [kV] | $U_{tot}$ [kV] | $n_c$ | $U_{ca}$ [V] | $3c_p$ | $k_{sp}$ | $k_{pp}$ | $Q_s$ |
|---|---|---|---|---|---|---|---|
| 4.16 | 5.6 | 6 | 940 | 3 | 1 | 1 | Multiple of 18 |
| 6.6 | 8.9 | 9 | 990 | 9 | 2 | 1 | Multiple of 27 |
| 13.2 | 17.8 | 18 | 990 | 9 | 1 | 1 | Multiple of 54 |

Stator winding systems are placed in stator slots in a known manner which is not described herein.

It will be obvious to a person skilled in the art that the inventive concept can be implemented in various ways. The invention and its embodiments are not limited to the examples described above but may vary within the scope of the claims.

## Claims

1. A medium voltage variable speed assembly comprising:

an electric machine (2) which is a rotating electric machine comprising a plurality of stator winding systems (4), wherein each of the stator winding systems (4) is a three-phase system; and
a power supply configuration for supplying alternating current power to the electric machine (2), wherein the power supply configuration comprises a supply converter system (6) having a direct current input (61) and an alternating current output (62) connected to the plurality of stator winding systems (4), wherein the supply converter system (6) comprises a plurality of converter arrangements (8) connected in series, and each of the plurality of converter arrangements (8) comprises at least one converter unit (82) and is adapted to supply alternating current power to at least one of the plurality of stator winding systems (4),
**characterized in that**
the direct current input (61) of the supply converter system (6) is a two-level input;
each converter unit (82) of the plurality of converter arrangements (8) is a two-level converter unit and has a DC link whose nominal voltage is less than or equal to 2kV;
a number of the stator winding systems (4) is greater than or equal to a number of the converter arrangements (8), wherein each of the converter units (82) is adapted to supply alternating current power to exactly one stator winding system (4);
each of the stator winding systems (4) is isolated from the ground and from the other stator winding systems (4);
a parameter q defined by an equation

$$q = \frac{Q_S}{2p3c_p}$$

is a number of stator slots per pole per phase, wherein $Q_s$ is a number of stator slots in the electric machine (2), p is a number of pole pairs in the electric machine (2), and $c_p$ is a number of stator winding system groups, wherein a number $n_c$ of converter arrangements (8) connected in series in the supply converter system (6) and a number $k_{sp}$ of stator poles connected in series in each stator winding system and a number $k_{pp}$ of stator poles

connected in parallel in each stator winding system fulfil a requirement $n_c k_{sp} k_{pp} = 2pc_p$ and product $qk_{sp}$ is an integer.

2. The medium voltage variable speed assembly according to claim 1, wherein the assembly comprises a controller (909) for controlling the power supply configuration such that a switching frequency of controllable switches of each converter unit (82) is greater than or equal to 750Hz, wherein the controllable switches are adapted to supply alternating current power to the plurality of stator winding systems (4).

3. The medium voltage variable speed assembly according to claim 1 or 2, wherein controllable switches of each converter unit (82) of the plurality of converter arrangements (8) comprise insulated-gate bipolar transistors and/or metal-oxide-semiconductor field-effect transistors, wherein the controllable switches are adapted to supply alternating current power to the plurality of stator winding systems (4).

4. The medium voltage variable speed assembly according to any one of the preceding claims, wherein a nominal voltage of the direct current input of the supply converter system (6) is

$$U_{tot} = \frac{3\sqrt{2}}{\pi} U_g \, ,$$

wherein $U_g$ is in a range of 4kV to 15kV.

5. The medium voltage variable speed assembly according to any one of the preceding claims, wherein the power supply configuration comprises a grid converter system (5) having an alternating current input adapted to be electrically connected to a three-phase electrical network, and a direct current output connected to the direct current input of the supply converter system (6).

6. The medium voltage variable speed assembly according to claim 5, wherein the grid converter system (5) has a six-pulse configuration with passive semiconductors.

7. The medium voltage variable speed assembly according to claim 5 or 6, wherein a nominal voltage ($U_g$) of the alternating current input of the grid converter system (5) is in a range of 4kV to 15kV.

8. The medium voltage variable speed assembly according to any one of the preceding claims, wherein each of the plurality of converter arrangements (8) comprises a capacitor system electrically connected to a direct current input thereof, wherein the capacitor system comprises at least one capacitor.

Fig. 1

Fig. 2

Fig. 3

Fig. 4

EP 4 576 561 A1

Fig. 5

Fig. 6

Fig. 7

Fig. 8

Europäisches
Patentamt

European
Patent Office

Office européen
des brevets

## EUROPEAN SEARCH REPORT

**Application Number**

EP 23 21 7951

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hornik Vaclav: "Zkraty na troleji", https://batavia.internal.epo.org/citenpl/prod/web/citenpl/citenpl.html?_url=https%3A//dspace5.zcu.cz/bitstream/11025/2375/4/049145_hodnoceni.pdf , 2 June 2012 (2012-06-02), pages 1-96, XP093180255, University of West Bohemia Retrieved from the Internet: URL:https://dspace5.zcu.cz/bitstream/11025/2375/1/Diplomova_prace_Vaclav_Hornik_E09N0265P.pdf [retrieved on 2024-06-28] | 1,3,8 | INV. H02P25/22 |
| Y | * page 7; figure 5 * <br> * page 2, line 2 * <br> * page 6, line 1 - line 6 * <br> * page 4, line 1 - line 2 * <br> ----- | 2,4-7 | |
| Y | PONTT J ET AL: "Output sinus filter for medium voltage drive with direct torque control", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 1, 2 October 2005 (2005-10-02), pages 204-209, XP010842372, DOI: 10.1109/IAS.2005.1518311 ISBN: 978-0-7803-9208-3 * page 1, right-hand column, paragraph second * ----- | 2 | **TECHNICAL FIELDS SEARCHED (IPC)** <br><br> H02P |

-/--

The present search report has been drawn up for all claims

| Place of search | Date of completion of the search | Examiner |
|---|---|---|
| Munich | 1 July 2024 | Fligl, Stanislav |

EPO FORM 1503 03.82 (P04C01)

page 1 of 2

Europäisches
Patentamt

European
Patent Office

Office européen
des brevets

## EUROPEAN SEARCH REPORT

**Application Number**

EP 23 21 7951

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/006951 A1 (HUGGENBERGER THOMAS [CH]) 3 January 2019 (2019-01-03) * paragraph [0017] * * paragraph [0052] * ----- | 4-7 | |
| | | | **TECHNICAL FIELDS SEARCHED (IPC)** |

The present search report has been drawn up for all claims

| Place of search | Date of completion of the search | Examiner |
|---|---|---|
| Munich | 1 July 2024 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 7951

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2024

| Patent document cited in search report | Publication date | Patent family member(s) | Publication date |
|---|---|---|---|
| US 2019006951 A1 | 03-01-2019 | EP 3383692 A1<br>US 2019006951 A1<br>WO 2017093273 A1 | 10-10-2018<br>03-01-2019<br>08-06-2017 |

EPO FORM P0459

For more details about this annex : see Official Journal of the European Patent Office, No. 12/82